# EUROPEAN PATENT APPLICATION

(11) **EP 1 321 396 A1**
(43) Date of publication of application: **25.06.2003**
(21) Application number: 02028356.0
(22) Date of filing: 17.12.2002
(51) Int. Cl.: B65G 57/24, B65G 57/03

(54) **Palletizing machine**

(30) Priority: 18.12.2001 IT TO20011189
(71) Applicant: OMA S.r.l., 37069 Villafranca di Verona (IT)
(72) Inventor: Baldi, Giampietro, 37069 Villafranca Di Verona (IT)
(74) Representative: Jorio, Paolo

(57) **Abstract**

A palletizing machine (1) for forming pallets (3) from a succession of single products (2); the palletizing machine (1) having a work platform (7) where the pallets (3) are formed successively, an output conveyor (8) for conveying each finished pallet (3) from the work platform (7), an input conveyor (9) for supplying a succession of loose products (2) close to the work platform (7), and a forming unit (10) for arranging the products (2) from the input conveyor (9) into a succession of rows (6) of products (2), and then transferring a given number of rows (6) of products (2) at a time directly over the top of the pallet (3) being formed on the work platform (7); the given number of rows (6) of products (2) being less than the total number of rows (6) of products (2) defining each layer (4) of the pallet (3); and the forming unit (10) then composing the layer (4) of products (2) directly over the top of the pallet (3) being formed on the work platform (7).

## Description

The present invention relates to a palletizing machine.

As is known, in the packaging machinery industry, a wide range of palletizing machines is available for fully automatically converting a succession of loose boxed products into a succession of pallets, each comprising a given number of layers of products stacked on a platform to form a single block that is easy to transport.

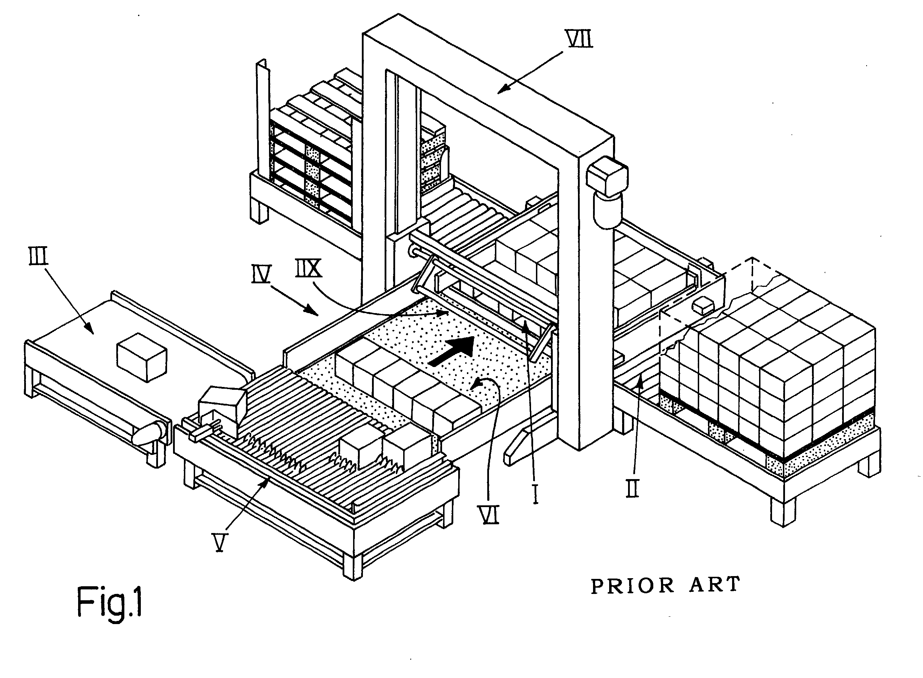

With reference to Figure 1, the most commonly marketed palletizing machines comprise: a work platform I where the pallets are formed successively; a first linear conveyor II for conveying each finished pallet coming off work platform I; a second linear conveyor III for supplying a succession of loose boxed products alongside work platform I; and a forming unit IV for arranging the loose boxed products coming off linear conveyor III into a single layer of products, and then transferring the whole layer of products onto the top of the pallet being formed on work platform I.

As shown in Figure 1, the forming unit IV currently used comprises an orienting and compacting device V, where the products coming off linear conveyor III are oriented and arranged side by side to successively form the rows of products eventually defining each layer of the pallet; and a forming and transfer shelf VI onto which the orienting and compacting device V successively transfers the rows of products to form each layer of the pallet.

The forming and transfer shelf VI is located between the orienting and compacting device V and work platform I, and, besides acting as a support for forming each layer of the pallet, also provides for transferring and depositing each layer of products onto the top of the pallet being formed on work platform I.

At present, the orienting and compacting device V is located alongside and a given distance from work platform I; and the forming and transfer shelf VI is movable vertically and horizontally on a supporting frame VII spanning work platform I, so as to be positioned alternately alongside orienting and compacting device V, to receive the rows of products forming a whole layer of the pallet, and just over the top of the pallet being formed on work platform I, to deposit the layer of products onto the top of the pallet.

Forming unit IV also comprises a movable stop IIX for selectively retaining the layer of products on forming and transfer shelf VI in position over the top of the pallet when withdrawing the shelf from the top of the pallet being formed on work platform I, so that the layer of products drops down onto the top of the pallet.

In other words, each layer of the pallet is formed on forming and transfer shelf VI positioned alongside orienting and compacting device V; forming and transfer shelf VI is then raised above the top of the pallet being formed on work platform I; and, on reaching the given height, forming and transfer shelf VI is moved horizontally into position just over the top of the pallet, and deposits the whole layer of products directly onto the top of the pallet being formed.

Palletizing machines of the above type have the major drawback of being bulky and extremely expensive, and therefore unsuitable for small-scale packaging systems.

Moreover, they fail to provide for an adequate degree of flexibility, being designed to maintain a continuously high hourly output rate which is often way above the needs of small-scale packaging systems.

A further drawback of palletizing machines of the above type is high electricity consumption, which greatly increases the overall running cost of the machine. That is, the need to lift a whole layer of products rapidly to the top of the pallet calls for high-power electric motors capable of rapidly accelerating the forming and transfer shelf VI bearing a considerable load.

It is an object of the present invention to provide a compact palletizing machine, which is also more flexible and cheaper than currently marketed machines.

According to the present invention, there is provided a palletizing machine for converting a succession of single products into a succession of pallets, each comprising a given number of layers of products arranged one on top of another; each layer of products comprising a number of adjacent rows of products; the palletizing machine comprising a work platform where the pallets are formed successively, an input conveyor for supplying a succession of loose products close to the work platform, and a forming unit for receiving the products from the input conveyor, forming one layer of products at a time from said products, and then depositing said layer onto the top of the pallet being formed on the work platform; the palletizing machine being characterized in that said forming unit arranges the products from the input conveyor into a succession of rows of products, and then transfers a given number of rows of products at a time directly over the top of the pallet being formed on the work platform; said given number of rows of products being less than the total number of rows of products defining each layer of the pallet; and said forming unit then composing the layer of products directly over the top of the pallet being formed on the work platform.

A non-limiting embodiment of the present invention will be described by way of example with reference to the accompanying drawings, in which:
Figure 2 shows a view in perspective of a palletizing machine in accordance with the teachings of the present invention;
Figures 3 and 4 show a plan view and side view respectively, with parts in section and parts removed for clarity, of the Figure 2 palletizing machine.

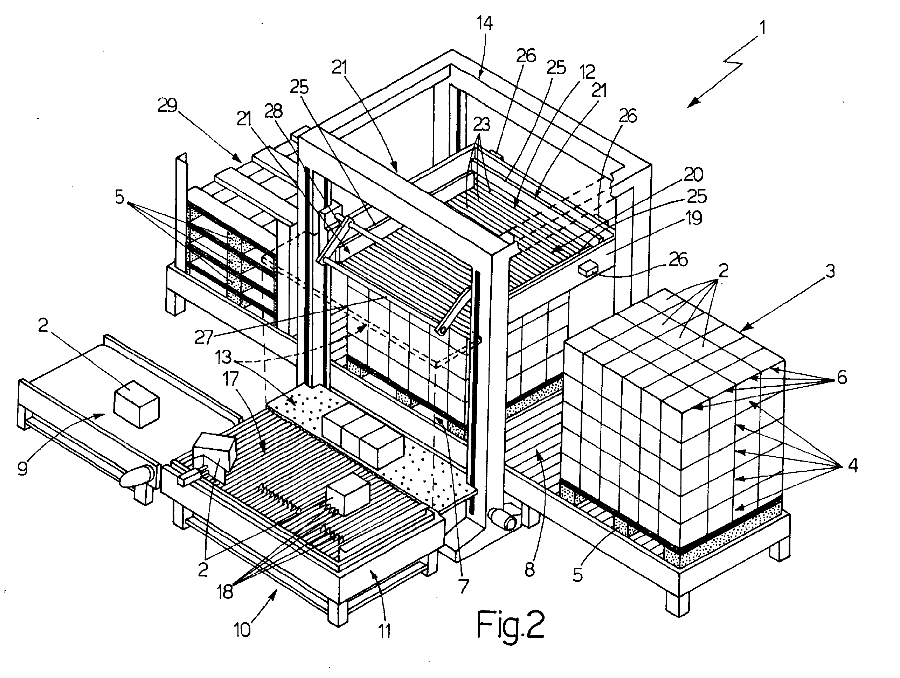

Number 1 in Figure 2 indicates as a whole a palletizing machine for automatically converting a succession of single products 2 into a succession of pallets 3, each defined by a given number of layers 4 of products 2 stacked on a generic platform 5 to form a single block that is easy to transport.

In the example shown, each pallet 3 comprises five layers 4 of parallelepiped-shaped boxed products 2; each layer 4 of products 2 comprises four parallel, adjacent rows 6 of products 2; and each row 6 of products 2 comprises six side by side single products 2.

Palletizing machine 1 comprises: a work platform 7 where pallets 3 are formed successively; a first linear conveyor 8 for conveying each finished pallet 3 coming off work platform 7; a second linear conveyor 9 for supplying a succession of loose products 2 alongside work platform 7; and a forming unit 10 for arranging the products 2 coming off linear conveyor 9 into a succession of rows 6 of products 2, and for transferring each row 6 of products 2 directly over the top of pallet 3 being formed on work platform 7, so as to compose the layer 4 of products 2 directly over the top of pallet 3 being formed on work platform 7.

It should be point out that rows 6 of products 2 may be transferred over the top of pallet 3 one, two, or more at a time, providing, obviously, that the total number of rows 6 transferred simultaneously over the top of pallet 3 being formed on work platform 7 is always less than the total number of rows 6 of products 2 defining each layer 4 of pallet 3.

With reference to Figures 2, 3 and 4, in the example shown, work platform 7 is defined by a portion of linear conveyor 8, which in turn is defined by a conventional roller conveyor; and linear conveyor 9 is located adjacent to work platform 7, with one end at the input of forming unit 10, and is defined by a known belt conveyor.

With reference to Figures 2, 3 and 4, forming unit 10 comprises an orienting and compacting device 11, where products 2 coming off linear conveyor 9 are oriented and arranged side by side to successively form the rows 6 of products 2 eventually defining each layer 4 of pallet 3; a forming platform 12 on which each layer 4 of pallet 3 is formed before being deposited onto the top of pallet 3 being formed on work platform 7; and a transfer platform 13 for transferring one or more rows 6 of products at a time from orienting and compacting device 11 to forming platform 12.

Orienting and compacting device 11 is located alongside work platform 7; forming platform 12 is mounted and movable vertically over work platform 7; and transfer platform 13 is mounted and movable vertically in the space between orienting and compacting device 11 and work platform 7.

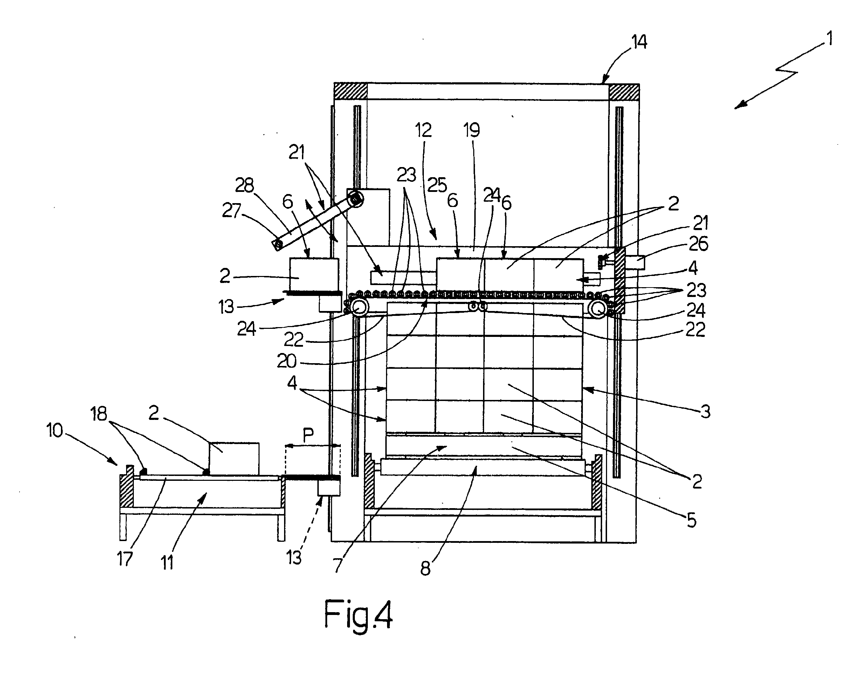

More specifically, transfer platform 13 is movable vertically between a loading position (Figure 2) located alongside, and for receiving one or more rows 6 of products 2 from, orienting and compacting device 11, and an unloading position (Figure 4) alongside forming platform 12, whatever height this is at, so as to transfer the row or rows 6 of products 2 it is carrying onto forming platform 12.

It should be pointed out that transfer platform 13 can transfer a given number of rows 6 at a time from orienting and compacting device 11 to forming platform 12; which number is always less than the total number of rows 6 of products 2 defining each layer 4 of pallet 3.

In the example shown, transfer platform 13 transfers one row 6 of products 2 at a time from compacting and orienting device 11 to forming platform 12.

With reference to Figures 2, 3 and 4, in the example shown, palletizing machine 1 comprises a supporting frame 14 spanning work platform 7 and in the form of a double gantry, on which both forming platform 12 and transfer platform 13 are mounted and movable vertically.

More specifically, forming platform 12 is mounted to run along the four uprights and so move vertically over work platform 7; while transfer platform 13 projects outwards of the periphery of supporting frame 14 to face orienting and compacting device 11, and is mounted to run along the two uprights directly facing orienting and compacting device 11.

Palletizing machine 1 obviously also comprises drive means 15 and 16 for moving forming platform 12 and transfer platform 13 respectively along the uprights of supporting frame 14, to position forming platform 12 as required just over the top of pallet 3 being formed on work platform 7, and to move transfer platform 13 on command between the loading position and the unloading position.

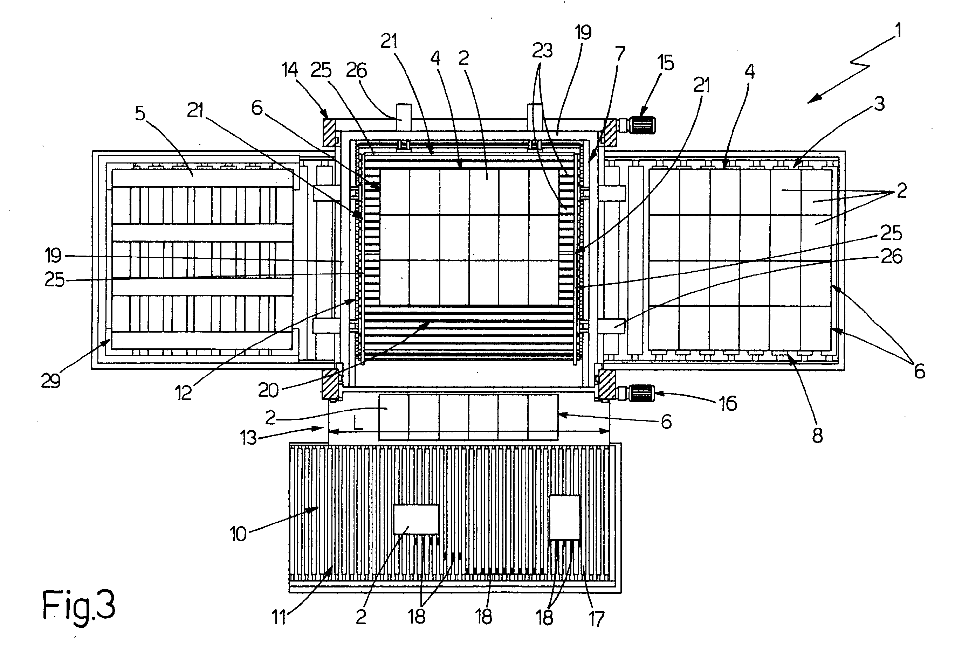

With reference to Figures 2 and 3, orienting and compacting device 11 is substantially known, and, in the example shown, comprises a roller conveyor 17, and a series of movable stops 18 for orienting products 2 in predetermined manner as they are fed along roller' conveyor 17.

More specifically, movable stops 18 project above the conveying surface of roller conveyor 17, and are arranged on the conveying surface so as each to engage the gap between two adjacent rollers. By means of a linear actuator not shown, each movable stop 18 is moved horizontally inside the gap between two adjacent rollers, i.e. parallel to the axes of rotation of the rollers, so as to contact, on command, the product 2 travelling along roller conveyor 17, and push product 2, crosswise to the travelling direction along roller conveyor 17, directly onto transfer platform 13 alongside roller conveyor 17.

With reference to Figures 2, 3 and 4, transfer platform 13 is defined by a horizontal, preferably, though not necessarily, rectangular shelf, which is fitted to, projects from, and runs along the two uprights of supporting frame 14 facing orienting and compacting device 11, so as to move vertically in the space between orienting and compacting device 11 and the uprights of supporting frame 14.

It should be pointed out that the horizontal shelf is sized to receive a number of rows 6 of products 2 smaller than the total number of rows 6 of products 2 defining each layer 4 of pallet 3; rows 6 obviously being arranged parallel and adjacent to one another.

In the example shown, the horizontal shelf is sized to receive and transfer one row 6 of products 2 to forming platform 12, and, more specifically, has a length L and a width P approximately equal to but no less than the length and width respectively of one row 6 of products 2.

With reference to Figures 2, 3 and 4, forming platform 12 is defined by a horizontal shelf with a central unloading hatch; and by a number of movable locating stops for compacting and retaining over the hatch the rows 6 of products 2 defining each layer of pallet 3. More specifically, the horizontal shelf is fitted to and moves vertically along the uprights of supporting frame 14 over work platform 7, and has a central unloading hatch, through which each layer 4 of products 2 formed on the shelf drops directly onto the top of pallet 3 being formed on work platform 7.

In the example shown, forming platform 12 comprises a rectangular supporting rim 19 fitted horizontally to and running along the four uprights of supporting frame 14 so as to move vertically over work platform 7; a movable supporting shutter 20 located at the bottom of supporting rim 19 to selectively engage the open space inside the rim and so define a horizontal supporting surface on which each layer 4 of pallet 3 is gradually formed; and a number of movable locating stops 21 for selectively compacting and retaining in the centre of supporting rim 19 the rows 6 of products 2 defining each layer of pallet 3.

More specifically, in the example shown, supporting rim 19 is U-shaped, and is fitted horizontally to and runs along the four uprights of supporting frame 14 precisely over work platform 7, so that the pallet 3 being formed on work platform 7 is centred beneath supporting rim 19. Supporting rim 19 is also sized to accommodate pallet 3 in the open space inside the rim, and is oriented with its two free ends facing transfer platform 13, so as to allow a clear passage for the rows 6 of products from transfer platform 13 into supporting rim 19.

Movable supporting shutter 20 is fitted to supporting rim 19 to move between a closed position, in which it engages the open space inside the rim to define a horizontal supporting surface on which to form each layer 4 of pallet 3, and an open position, in which it clears the open space inside the rim to allow the layer 4 of products 2 to drop directly onto the top of pallet 3 being formed on work platform 7.

With reference to Figures 3 and 4, in the example shown, movable supporting shutter 20 comprises two synchronized roller shutters, each for engaging half the open space inside supporting rim 19, i.e. half the bottom of supporting rim 19.

In the example shown, each of the two roller shutters comprises two drive chains 22 fitted movably to the two opposite sides of supporting rim 19; and a number of supporting rollers 23 spanning the two drive chains 22, with each axial end fitted to rotate freely on a respective drive chain 22.

More specifically, each drive chain 22 is looped about a number of toothed wheels 24 fitted in rotary manner to the body of supporting rim 19, and the supporting rollers are equally spaced across the two drive chains 22, along the horizontal top portion of each of the two chains extending along the side of the bottom of supporting rim 19.

Each of the two roller shutters has a drive unit (not shown) for moving the two drive chains 22 back and forth on command, so as to move supporting rollers 23, on command, between a first operating position in which supporting rollers 23 fully engage the bottom the supporting rim 19 to define the horizontal supporting surface on which each layer 4 of pallet 3 is formed, and a second operating position in which supporting rollers 23 clear the bottom of supporting rim 19 to allow layer 4 of products 2 to drop by force of gravity directly onto the top of pallet 3 being formed on work platform 7.

Movable supporting shutter 20 is in the closed position when supporting rollers 23 are in the first operating position, and is in the open position when supporting rollers 23 are in the second operating position.

With reference to Figures 2 and 3, in the example shown, forming platform 12 is fitted with four movable locating stops 21 extending along the four sides of the inner peripheral edge of supporting rim 19.

Three of the four movable locating stops 21 each comprise a horizontal cross member 25 extending parallel to the corresponding side of the inner peripheral edge of supporting rim 19; and two linear actuators 26 for moving horizontal cross member 25 horizontally, on command, to and from an operating position in which horizontal cross member 25 rests against the facing side of the outer peripheral edge of layer 4 of pallet 3.

The fourth movable locating stop 21, on the other hand, comprises a horizontal cross member 27 extending parallel to the corresponding side of the inner peripheral edge of supporting rim 19; and two articulated supporting and actuating arms 28 fixed to the top of supporting rim 19 and for moving horizontal cross member 27, on command, along the whole surface of horizontal shelf 13 defining transfer platform 13, and along the whole area inside supporting rim 19, so as to push the row/s 6 of products 2 on horizontal shelf 13 directly onto movable supporting shutter 20 inside supporting rim 19.

More specifically, articulated supporting and actuating arms 28 are designed to move horizontal cross member 27 both horizontally and vertically, so as to get over the row/s 6 of products 2 on transfer platform 13, and then push row/s 6 of products 2 along supporting rollers 23 of movable supporting shutter 20 into the centre of supporting rim 19.

In addition, the fourth movable locating stop 21 also cooperates with the other three movable locating stops 21 to compact the row/s 6 of products 2 from transfer platform 13 against the rows 6 of products 2 already in position on movable supporting shutter 20 inside supporting rim 19, and then clamp the whole layer 4 of products 2 in the centre of supporting rim 19 to prevent it from moving when opening movable supporting shutter 20.

With reference to Figures 2 and 4, in the example shown, palletizing machine 1 also comprises a platform store 29 for depositing a platform 5, on command, on work platform 7 when commencing the formation of each pallet 3. Platform store 29 is of a type widely used in the industry and therefore not described in detail.

Palletizing machine 1 also comprises a control unit for controlling linear conveyors 8 and 9, forming unit 10, and platform store 29 (if any) to produce pallets 3 automatically from a succession of single products 2.

Operation of palletizing machine 1 will now be described, assuming forming platform 12 has just finished unloading a layer 4 of products 2 onto the top of pallet 3 being formed on work platform 7.

In actual use, as transfer platform 13 moves vertically to receive a row 6 of products 2 from orienting and compacting device 11, forming platform 12 is raised sufficiently to close movable supporting shutter 20, and then waits for the rows 6 of products 2 required to form another layer 4 of pallet 3.

When enough rows 6 of products to form another layer 4 of products 2 have been fed by transfer platform 13 onto forming platform 12, forming platform 12 compacts and clamps the rows 6 in layer 4, and then opens movable supporting shutter 20 again so that the whole layer 4 of products drops down onto the underlying layer 4.

The advantages of palletizing machine 1 as described above are obvious: a forming unit 10 designed to form layer 4 of products 2 directly over the top of pallet 3 being formed on work platform 7 enables a drastic reduction in size as compared with currently marketed palletizing machines. As opposed to a platform for accommodating a whole layer 4 of products, i.e. forming and transfer shelf VI, the space between orienting and compacting device 11 and work platform 7 is occupied by transfer platform 13 sized to receive and transfer to forming platform 12 a small number of rows 6 of products 2.

Another advantage of palletizing machine 1 lies in the drive means 16 for moving transfer platform 13 being designed to move a much lighter weight as compared with other machines (the rows 6 raised are now less than the total number of rows 6 in each layer 4), thus greatly reducing electricity consumption.

The same also applies to drive means 15, which now raise forming platform 12 in steps when it is completely unloaded, with no fast acceleration or particularly high degree of precision required, so that they are much simpler in design and therefore cheaper.

Clearly, changes may be made to palletizing machine 1 as described and illustrated herein without, however, departing from the scope of the present invention.

In particular, as opposed to two roller shutters, movable supporting shutter 20 may be defined by two flat horizontal plates fitted to the bottom of supporting rim 19 and moved horizontally by appropriate drive means fitted to the rim.

The plates obviously lie in the same horizontal plane, and the drive means provide for moving the two plates, on command, between a first operating position in which they are positioned adjacent to each other inside supporting rim 19 to define the supporting surface for the rows of products when forming the layer, and a second operating position in which they project outwards from opposite sides of the supporting rim. Movable supporting shutter 20 is in the closed position when the horizontal plates are in the first operating position, and is in the open position when the horizontal plates are in the second operating position.

The two horizontal plates must obviously be sized to close the whole space inside supporting rim 19 when positioned adjacent to each other.

## Claims

1. A palletizing machine (1) for converting a succession of single products (2) into a succession of pallets (3), each comprising a given number of layers (4) of products (2) arranged one on top of another; each layer (4) of products (2) comprising a number of adjacent rows (6) of products (2); the palletizing machine (1) comprising a work platform (7) where the pallets (3) are formed successively, an input conveyor (9) for supplying a succession of loose products (2) close to the work platform (7), and a forming unit (10) for receiving the products (2) from the input conveyor (9), forming one layer (4) of products (2) at a time from said products (2), and then depositing said layer (4) onto the top of the pallet (3) being formed on the work platform (7); the palletizing machine (1) being **characterized in that** said forming unit (10) arranges the products (2) from the input conveyor (9) into a succession of rows (6) of products (2), and then transfers a given number of rows (6) of products (2) at a time directly over the top of the pallet (3) being formed on the work platform (7); said given number of rows (6) of products (2) being less than the total number of rows (6) of products (2) defining each layer (4) of the pallet (3); and said forming unit (10) then composing the layer (4) of products (2) directly over the top of the pallet (3) being formed on the work platform (7).

2. A palletizing machine as claimed in Claim 1, **characterized in that** said forming unit (10) comprises a forming platform (12) on which each layer (4) of the pallet (3) is formed before being deposited onto the top of the pallet (3) being formed on the work platform (7); and a transfer platform (13) for transferring at least one row (6) of products (2) at a time to the forming platform (12); the forming platform (12) being movable vertically over said work platform (7); and the transfer platform (13) being movable vertically alongside said forming platform (12).

3. A palletizing machine as claimed in Claim 2, **characterized in that** said forming unit (10) comprises an orienting and compacting device (11) for receiving the loose products (2) from said input conveyor (9), and for supplying a succession of rows (6) of products (2).

4. A palletizing machine as claimed in Claim 3, **characterized in that** said transfer platform (13) is located between the orienting and compacting device (11) and the work platform (7), and is movable on command between a loading position in which it is located alongside the orienting and compacting device (11) to receive said at least one row (6) of products (2), and an unloading position in which it is located alongside the forming platform (12), whatever height the forming platform (12) is at, to transfer said at least one row (6) of products (2) onto said forming platform (12).

5. A palletizing machine as claimed in any one of Claims 2 to 4, **characterized in that** said forming platform (12) comprises a shelf having a central unloading hatch through which each layer (4) of products (2) formed on the shelf is caused to drop onto the top of the pallet (3) being formed on the work platform (7).

6. A palletizing machine as claimed in Claim 5, **characterized in that** said forming platform (12) comprises a horizontal supporting rim movable vertically over the work platform (7), and a supporting shutter (20) fitted movably over the opening formed in the centre of the supporting rim (19); the shutter (20) being fitted to the supporting rim (19) to move between a closed position in which it engages the inside of the supporting rim to define a horizontal supporting surface on which each layer (4) is formed, and an open position in which it is located outside the supporting rim to allow the layer (4) of products (2) to drop directly onto the top of the pallet (3) being formed on the work platform (7).

7. A palletizing machine as claimed in any one of the foregoing Claims, **characterized by** comprising an output conveyor (8) for conveying each finished pallet (3) from the work platform (7).

8. A palletizing machine as claimed in any one of the foregoing Claims, **characterized in that** the layers (4) of products (2) defining each pallet (3) are stacked on a generic platform (5), and the machine comprises a platform store (29) for depositing a said platform (5) on command on the work platform (7) when commencing the formation of each new pallet (3).
